(19) Europäisches Patentamt
European Patent Office
Office européen des brevets

(11) **EP 1 987 910 B1**

(12) **EUROPEAN PATENT SPECIFICATION**

(45) Date of publication and mention
of the grant of the patent:
**30.12.2009 Bulletin 2009/53**

(51) Int Cl.:
***B23K 26/03*** *(2006.01)*

(21) Application number: **07425259.4**

(22) Date of filing: **02.05.2007**

(54) **A method for instantly evaluating the quality of a weld**

Verfahren zur unmittelbaren Evalutation einer Schweißqualität

Méthode d'évaluation instantannée de la qualité d'une soudure.

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**05.11.2008 Bulletin 2008/45**

(73) Proprietor: **TERNITECHNOLOGIE S.p.A.
05100 Terni (IT)**

(72) Inventors:
• **Sibillano, Teresa
Via Amendola 173
70126 Bari (IT)**
• **Ancona, Antonio
Via Amendola 173
70126 Bari (IT)**
• **Lugara, Pietro Mario
Via Amendola 173
70126 Bari (IT)**
• **Berardi, Vincenzo
Via Amendola 173
70126 Bari (IT)**

(74) Representative: **Marietti, Andrea
Marietti, Gislon e Trupiano S.r.l.
Via Larga, 16
20122 Milano (IT)**

(56) References cited:
**EP-A2- 0 911 110      DE-A1- 4 313 287
JP-A- 2002 079 386**

**Description**

The present invention relates to a method for the instant evaluation of the welding quality during a welding process, of the type with plasma generation, according to the preamble of claim 1, such as those using a laser beam in a "deep penetration" condition. Document DE-A-4 313 287 discloses such a method. This method is preferably aimed at the instantaneous identification of any defects in the welding seam during the welding operation.

To this purpose, it is known in the art to analyze the power emissions of the plasma that is generated during the welding operation in order to relate them with the presence of any defects in the welding seam.

It is particularly known to sample, at a known sampling frequency, the electromagnetic radiations that are emitted in the visible and ultra-violet fields, and sometimes in the infrared field, by the plasma generated during the welding operation, and then directly check the intensity and/or spectrum of these radiations for finding any abnormalities that indicate the presence of a defect.

For example, the European Patent Application EP-A-0.911.110 A2, in the name of TRW Inc., teaches to measure the dimensions of the plasma generated during the welding operation on the basis of the acquisition of the intensity of the light radiation emitted by the plasma, in order to compare these dimensions with threshold values, which have been previously identified via suitable calibration processes, which provide an indication that defects may be present in the welding seam.

The Japanese Patent JP 2002079386, in the name of NIPPON STEEL Co., describes a method for identifying defects in a laser welding in which the intensity of the spectral lines is acquired of several species that are present in the welding plasma, at a certain location of the welding seam, and the ratio between two or more of the detected intensities is a parameter that is empirically related with the presence/absence of defects at the location of the welding seam being examined.

Both methods discussed above, and others (not cited herein) that are based on the analysis in the frequency domain of the light spectrum acquired via suitable sensors, however, have proved to be poorly effective in predicting the type and extent of any defects that are present during the welding operation. Particularly, while some of these methods can detect, with a not high reliability, the presence of defects concerning the welding penetration depth, however, they are not capable of providing clear indications about the type of defect that has been found and/or they are not capable of providing immediate, i.e. instantaneous, information, during the welding operation, since they require considerable calculation power in order to be implemented.

Alternatively to the methods that have been briefly set forth above, it is also known in the art to calculate (and/or estimate), on the basis of the intensity of pairs of spectral lines, instant by instant, the so-called plasma electron temperature, which has proved to be strictly related to the presence/absence of defects in the welding seam.

The Italian Patent IT 1.314.519, in the name of ISTITUTO NAZIONALE per la FISICA della MATERIA di Genova, teaches to use this estimate of the welding plasma electron temperature to instantaneously detect any defects that can occur during a welding operation of the type indicated above.

While this method does not require an excessive calculation power to be implemented, it is quite efficient in detecting any defects, but is not capable of providing accurate information on the type of defect that is present, and thus it is not capable of providing technological information, such as for example the welding instantaneous parameters, which can allow correcting the defectiveness during the welding operation or during subsequent welding operations with expected equal defectiveness.

It is accordingly an object of the present invention to provide a method for evaluating the quality of a welding of the type with plasma generation which can be implemented such as to provide accurate estimates, on the presence of any defects, or generally on the quality of the welding, instant by instant, during the welding operation, while also providing accurate estimates on the extent and type of the defects that have been found.

Another object of the present invention is to provide a method allowing instantaneously checking the welding process, of the type with plasma generation, on the basis of a parameter indicating the welding quality.

These and other objects are achieved by the method for the instantaneous evaluation of the welding quality during a welding process, wherein plasma generation occurs, of metal materials according to the first independent claim and subsequent dependent claims, and by the method for the instantaneous identification of defects in the welding seam of metal materials during a welding process in which plasma generation occurs, according to claims 23 and 24, as well as the method for the instantaneous control of a welding process in which plasma generation occurs of metal materials, according to claims 25 and 26.

The method for the instantaneous evaluation of the welding quality during a welding process on metal materials, in which plasma generation occurs, according to the present invention, comprises the following steps:

a) instantaneous acquisition, at a predetermined frequency $\varphi$, of the radiations emitted by the plasma during the welding operation; and

b) generation/acquisition, at any acquisition instant of said radiations emitted by the plasma, of the respective emission spectrum.

The method according to the present invention also advantageously comprises, for each considered welding instant $t_0$, the following steps:

c) definition of a time interval $\Delta T$ preceding said instant $t_0$;
d) selection of two or more lines **i, j** of the spectrum corresponding to two or more wavelengths $\lambda_i$, $\lambda_j$;
e) measurement of their intensities $x_i(t)$, at each radiation acquisition instant **t** comprised within the time interval $\Delta T$;
f) calculation of at least one synthesis coefficient $c_{i,j},...,$ function of the intensity over time of the two or more lines of the spectrum that have been previously selected $c_{i,j},...=f(x_i(t),x_j(t), ... );$
g) analysis of the synthesis coefficient $c_{i,j}$ for evaluating the welding quality;

and in which said synthesis coefficient $c_{i,j}$ is a statistical correlation parameter of the intensities of the two or more spectral lines selected, within said time interval $\Delta T$.
The use of a statistical correlation parameter $c_{i,j},...,$ such as the covariance, calculated on the intensities $x_i(t)$, detected over time within a suitable interval $\Delta T$, of even a few spectral lines corresponding to suitable species of chemical elements that are present in the welding plasma, has been proved to provide excellent results in the instantaneous determination of the welding quality, and also in determining the type of defect that, instant by instant, may in case occur in the welding seam, while the welding process is being performed.

Surprisingly, the Applicant could ascertain that the use of the sampled intensity measures of only two spectral lines - which intensities are thus considered as statistical variables - that are for example, and preferably, selected among those relating to different species of metal elements being present in the welding, for calculating said statistical correlation parameter $c_{i,j}...,$ offers a high precision in determining the welding conditions, and particularly the type of welding error that may be found in the plasma generation area of which the emitted radiation is acquired, and also allows determining, quite instantaneously, these welding conditions due to the relatively reduced amount of variables and acquired values; which reduced amount allows implementing this method on processing means that are not necessarily provided with excessive calculation power.

According to a preferred aspect of the present invention, the method provides the welding quality to be evaluated not only on the basis of said statistical correlation parameter $c_{i,j}...,$ but also on the basis of the plasma instantaneous electron temperature **(Te(to))**, which is calculated, at each considered instant $t_0$ of the welding process, by means of the following steps:

h) selection of one or more pairs of spectral lines; and
i) calculation of the instantaneous measure of the plasma electron temperature $Te(t_0)$ over time on the basis of the intensity of these one or more pairs of spectral lines;

after the following above-mentioned steps have been carried out:

a) instantaneous acquisition, at a predetermined frequency $\varphi$, of the radiations emitted by the plasma during the welding operation; and
b) generation/acquisition, at each instant of acquisition of the radiations emitted by the plasma, of the respective emission spectrum.

Particularly, according to another aspect of the present invention, both the statistical correlation parameter $c_{i,j}...,$ and - in case - the plasma electron temperature **(Te($t_o$)),** can be compared with respective threshold values, that can be for example statistical significance values and/or values identified during previous calibrations steps, such as to have, instant by instant, an effective indication about the welding quality.

Furthermore, according to a preferred aspect of the present invention, the method claimed herein for evaluating the quality of a welding with generation of plasma is used for determining the presence of any defects in the welding seam, and particularly the step of evaluating said statistical correlation parameter can be carried out if the evaluation of said plasma electron temperature has given a result corresponding to the presence of a defect in the welding seam.

According to a further aspect of the present invention, the method, claimed herein, for evaluating the quality of welding with generation of plasma can be used for determining, instant by instant, the welding parameters, such as to correct the welding process if defects should start to occur in the welding seam.

Several preferred embodiments of the method according to the present invention will be described herein, by way of indicative and non-limiting example, with reference to the annexed figures, in which:

Fig. 1 is a schematic view of a device arranged for implementing the method according to the present invention;

Fig. 2 is a simplified block diagram of a particular embodiment of the method for evaluating the welding quality, during a welding operation of the type with plasma generation, according to the present invention;

Fig. 3 is a simplified block diagram of a further embodiment of the method according to the present invention, particularly suitable to the instantaneous identification of defects in the welding seam;

Fig. 4 and 5 are exemplary spectrograms that can be used with the method of the present invention; and

Fig. 6 is a diagram, also merely exemplary, which reports the trend of the plasma electron temperature as the welding is being performed, during a welding process without defects.

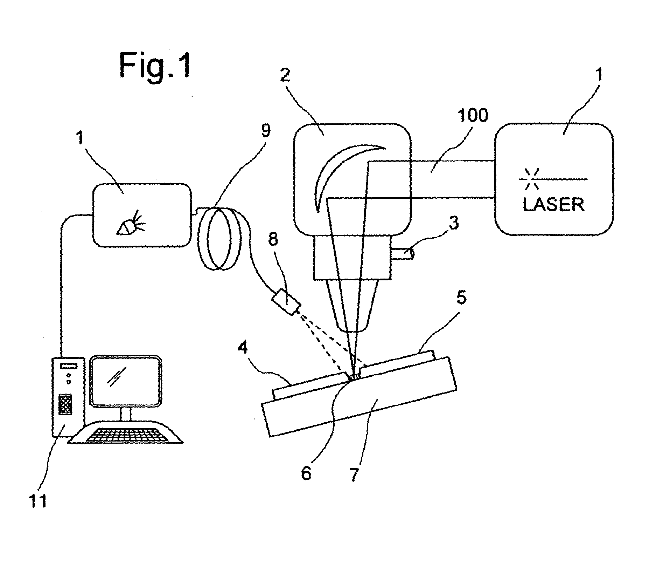

Referring first to Fig. 1, the method for assessing the quality of a welding, according to the present invention, can be applied to those processes of welding metal materials with plasma generation at the welding seam, and particularly, although not exclusively, it can be applied to those deep penetration laser welding processes in which the beam 100, emitted by a high power laser source 1 (for example, a $CO_2$ laser source, or a Nd:YAG laser), is directed, due to a focusing head 2, on the welding edges of the two metal parts 4, 5, together with an assisting (or shielding) gas flow. The relative displacement of the laser beam 100 relative to the two metal parts 4, 5, determines the melting of consecutive areas of the two adjacent edges of these metal parts 4, 5, thus consequently welding the latter. During this relative displacement of the beam 10 relative to the metal parts 4, 5, which are suitably arranged on a work table 7, a plasma 6 is formed proximate to the point of incidence of the laser beam 100 on the two adjacent edges of the metal parts 4, 5 that are subjected to welding. The method of the present invention, when applied to the welding process in Fig. 1, can be implemented by means of a device comprising an optical collimator 8, suitably directed such as to receive the electromagnetic radiations emitted by the plasma 6, instant by instant, which is connected to a spectrometer 10, by means of optical fibers 9. The spectrometer 10 is thus, in turn, functionally connected to information processing means 11 that sample, at a predetermined frequency $\varphi$, the signals coming from the same spectrometer 10 and then filter and digitalize them, such as to provide the intensities $x_i(t)$ of the spectral lines $i$ of each spectrogram that is acquired at each sampling instant $t$ (or $t_k$) to further processing, at least for a certain number of consecutive sampling instants $t$. These spectral lines $i$, which are preferably comprised within a given wavelength interval, naturally correspond to the various species (i.e. to the various ionization states or not) of the chemical elements that are present in the plasma.

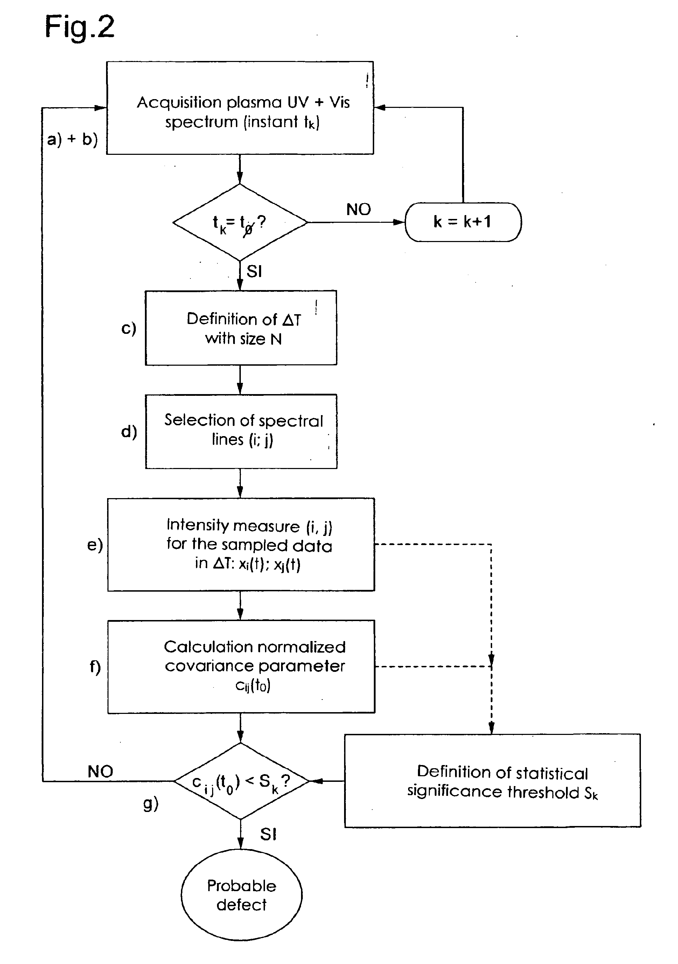

Considering also Fig. 2, the method for evaluating the quality of a welding 6, of the type in which a generation of plasma occurs, on two metal materials 4, 5, according to the present invention comprises, from the starting instant $t_{iniziale}$ of the welding process and at each subsequent sampling instant, for example being carried out at a certain frequency $\varphi$, the steps of:

a) acquisition, at each sampling instant $t_k$ of the radiation emitted by the plasma 6, in the generation area of the plasma 6. This step, with the device in Fig. 1, can be carried out by the collimator 8, which, in order to acquire the emissions coming from the welding plasma 6, can either follow the point of incidence of the laser beam 100 on the metal pieces 4, 5 to be welded, when the beam 100 is displaced relative to the table 7, or can be directed to this point of incidence of the beam, when that the table 7 is displaced relative to the beam 100;

b) generation/acquisition, at each sampling instant $t_k$, of the spectrum of the radiation emitted by the plasma 6. Using the device illustrated in Fig. 1, this step can be carried out by means of the spectrometer 10 and processing means 11.

It should be observed that, preferably, not the entire spectrum of the radiation emitted by the plasma is acquired by the processing means 11, but the spectrum substantially acquired only relates to the wavelength interval of the visible and ultra-violet range (for example, 200nm to 800nm), since it is known that those spectral lines that do not fall within this wavelength interval are slightly significant to the process quality evaluation, in the field of welding processes with plasma generation, mainly in the case of laser welding in deep penetration condition.

Said steps a) and b), furthermore, can be practically implemented such that the acquisition of the spectrograms at each sampling instant is limited to a predefined sampling time interval $\Delta T_{MAX}$, such as to prevent the storage of an excessive amount of signals or data.

It should be also noted that the sampling frequency $\varphi$ can be selected as desired, with the proviso that it allows acquiring, within a certain predefined time interval, a statistically significant number $N$ of samples.

The method of the present invention provides that, within the time interval encompassing the entire welding process, there are instants $t_0$, preferably occurring at a given frequency $f$ (lower than said frequency $\varphi$), wherein the values that are sampled during said steps a) and b) are analyzed to determine the welding quality.

At each considered instant $t_0$, according to a particular aspect of the present invention, the sampling frequency $\varphi$ can be changed, as will be seen below, as a function of the peculiar requirements concerning the acquisition of a significant amount of data.

In greater detail, the method of the present invention provides that, for each instant $t_0$ considered, in which $t_0$ is sequential to $t_{iniziale}$, the following steps are carried out:

c) definition of a time interval $\Delta T$, preceding the instant $t_0$, containing **N** sampling instants (or inputs) $t_k$, such that **N** sequential spectrograms preceding the instant to are stored. The determination of the time length of the interval $\Delta T$ can be, and preferably is, a function of the welding speed: the faster the welding speed, the more the interval $\Delta T$ can be reduced, due to obvious reasons of congruity of the data used for subsequent calculations. This does not mean that the number **N** of samples ranging within the interval $\Delta T$ must necessarily decrease as its time length decreases, since the sampling frequency $\varphi$ of the data, at each instant $t_0$, can be consequently increased. Furthermore, it should be observed that, at each instant $t_0$ in the succession of instants $t_0$ considered, the respective time interval $\Delta T = \Delta T(t_0)$ can be partially superimposed to the time interval $\Delta T = \Delta T(t_{0-1})$ of the preceding instant $t_{0-1}$ considered by the method of the present invention. In other words, at each instant $t_0$ the time window immediately preceding to within which the values adopted by the statistical variables considered (i.e. the intensity measures of the spectrum lines) can be of constant length and shift over time (so called "time shift");

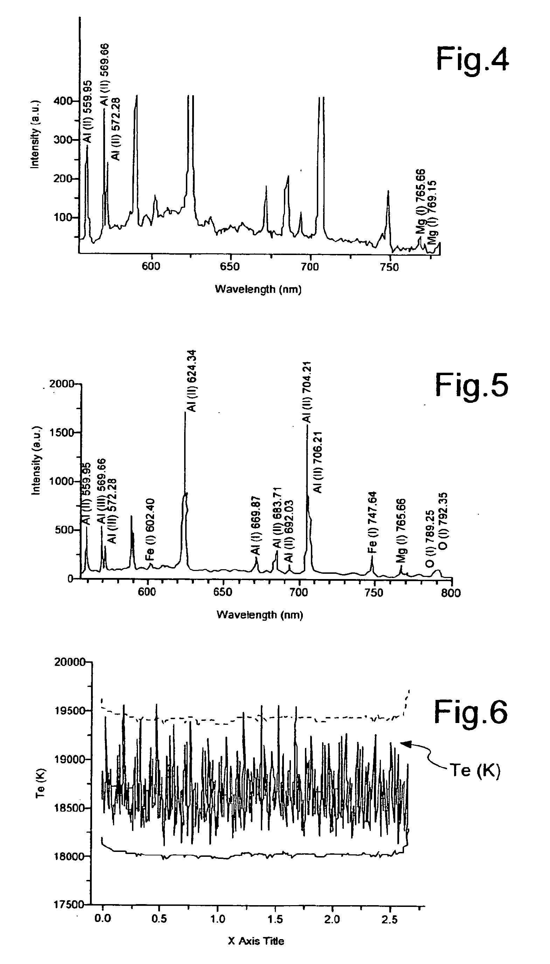

d) selection of at least two spectral lines **i, j** corresponding to wavelengths $\lambda_i$, $\lambda_j$ that are present in the sampled spectrograms (see for example, Fig. 4 and 5), and relating to species of chemical elements that are present in the plasma 6. These spectral lines, for example relating to at least two different ionization states of the same chemical (for example, metal) species, or species of two different metal elements, or different chemical species of a same metal alloy, or still species of a metal element and oxygen, or others, can be selected at each considered instant $t_0$ as a function of the desired type of welding quality evaluation to be carried out;

e) retrieval, among the **N** sampled data, of the intensity measures $xi(t_k)$ of the radiations emitted, for each respective sample acquired within the interval $\Delta T$ (or for each instant $t_k$ sampled and present in $\Delta T$), concerning the wavelengths $\lambda_i$, $\lambda_j$,... considered. In case that only two spectral lines **i, j** are considered, and in case of **N** samples in $\Delta T$, an intensity value matrix (Nx2) is thus obtained of the selected spectral lines to be subjected to, as will be seen below, further processing; these intensity measures being considered as statistical variables;

f) calculation of at least one synthesis coefficient $c_{i,j}(t_0)$, which is a function of said intensity measures $x_i(t_k)$ of the selected at least two spectral lines over time, and which is a statistical correlation parameter between the intensity measures, calculated on the whole interval $\Delta T$. Particularly, according to a preferred aspect of the present invention, this synthesis coefficient $c_{i,j}(t_0)$, can be based on a covariance measure, which may be normalized. For example, in case of only two spectral lines **i, j** selected and **N** samples within the interval $\Delta T$, the following relationship (not normalized) can be used:

$$c_{i,j} = \frac{1}{N}\sum_{k=1}^{N} x_i(t_k)x_j(t_k) - \left[\frac{1}{N}\sum_{k=1}^{N} x_i(t_k)\right] \cdot \left[\frac{1}{N}\sum_{k=1}^{N} x_j(t_k)\right]$$

or the following (normalized) relationship:

$$\bar{c}_{i,j} = \frac{c_{i,j}}{\left(c_{i,i} \cdot c_{i,j}\right)^{\frac{1}{2}}}.$$

Alternatively, other statistical correlation parameters known in the art can be used, such as the correlation coefficient (either linear or multiple, as a function of the considered number of variables) or it is possible to use Covariance Mapping Techniques (CMT), or other statistical techniques not mentioned herein, to obtain a statistical correlation index between the variables considered;

g) instantaneous evaluation, for each considered instant $t_0$ of the welding quality, by means of the analysis of said correlation parameter $c_{i,j}$. This analysis, which can also be carried out on the succession of parameters $c_{i,j}$ over time, can comprise a comparison step, for each instant $t_0$ of the correlation parameter $c_{i,j}$ with one or more threshold values $S_k$, which are defined based on previous calibration steps, i.e. testing the method with welds having known defects, or on the basis of statistical significance thresholds calculated on the same parameter $c_{i,j}$ and thus as a function of the spectral lines **i, j** selected. It should be observed that the latter possibility, which does not provide a burdensome calibration step of the method, has proved to be very effective in analysing, instant by instant, the welding quality.

According to another peculiar aspect of the present invention, to the above-mentioned steps a) - g) the following steps can be also associated, for each instant $t_0$ considered in the evaluation of the welding quality :

h) selection of one or more pairs **(m, n)** of spectral lines, which can be optionally obtained from the last spectrogram available (for example, that of the instant $t_0$ considered). It should be noted that these pairs of spectral lines are not necessarily coincident with the two or more spectral lines **i, j** selected during the above-mentioned step c) of the method. Furthermore, this pair **(m, n)** of spectral lines can be changed at each instant $t_0$ considered;

i) calculation, at the instant $t_0$ considered, of the plasma electron temperature $Te(t_0)$ (see, for example, Fig. 6) based on the recorded intensity $x_m$, $x_n$ of the pair/s of spectral lines **(m, n)** considered. To calculate **Te**, for example, the following formula can be used, in which the indexes **m, n** concern the two spectral lines considered, **k** is a constant, $\lambda_m$, $\lambda_n$ are the wavelengths of the pairs of spectral lines considered and the quantities **E(m), E(n)** are a measure of the excited electron level, **A(m), A(n)** are the probability of electron transition and **g(m), g(n)** is the statistical weight:

$$Te = \frac{E(m) - E(n)}{k \cdot \ln\left[\dfrac{x_n A(m) g(m) \lambda_n}{x_m A(n) g(n) \lambda_m}\right]}$$

j) analysis of this plasma electron temperature $Te(t_0)$ to determine the welding quality, in combination with said analysis of the synthesis coefficient $c_{i,j}$. Particularly, according to a preferred aspect of the method according to the present invention, this analysis of the electron temperature $Te(t_0)$ is carried out by comparing the latter with one or more predefined threshold values $TeS_k$, which are preferably obtained by means of a previous calibration step, i.e. by testing the above-cited steps, under known welding conditions.

This method for evaluating the welding quality by analyzing the plasma electron temperature is described in IT 1.314.519 and the combination of the same with the method for evaluating the instantaneous correlation parameter $c_{i,j}$ between two or more spectral lines, according to the present invention, has proved to be particularly effective.

Naturally, the steps described above are repeated for each subsequent instant $t_0$, until the welding is completed, preferably, as stated above, at a frequency **f** that allows a quick evaluation of the welding quality, without requiring excessive calculation power.

According to a further aspect of the present invention, the method for evaluating the quality of a welding with plasma generation can be particularly used for the instantaneous identification, i.e. at each considered instant $t_0$ during the welding process, of any defect that is present in the welding seam. The correlation parameter $c_{i,j}$, mainly when compared with the statistical significance thresholds thereof, has particularly proved to be very effective in determining the type of any defect that may be produced during the welding operation. The Applicant has found that, when the above-said correlation parameter $c_{i,j}$ is calculated on the basis of the intensity of the spectral lines of predefined chemical species that are present in the plasma, for example, relative to metal elements, and even though this parameter $c_{i,j}$ is calculated on the basis of only two chemical species, when compared with its statistical significance thresholds (such as obtained from well known significance tests) it offers excellent indications on the type of defect that may be present in the welding.

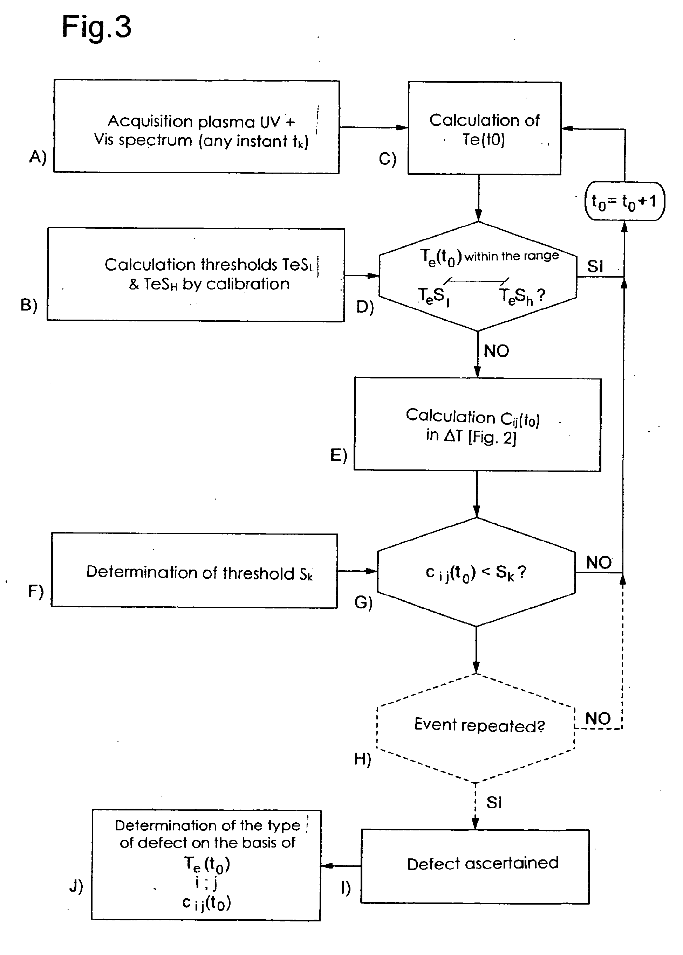

In a particular embodiment of the method for detecting defects according to the present invention, with reference now to Fig. 3, the previous analysis of the instantaneous electron temperature $Te(t_0)$, and thus the indication provided by this analysis on the presence/absence of a welding defect is set as a pre-condition for any subsequent analysis of said correlation parameter $c_{i,j}$.

In greater detail, this particular method provides, for each instant $t_0$ considered during the welding, the steps of:

A) acquisition and generation of the spectrum, preferably limited to the visible (Vis) and Ultraviolet (UV) optical fields either by means of filters, or using more than one diffraction grating within the spectrometer 10, of the plasma 6 generated during the welding operation, with a given sampling frequency. It should be noted that, for optionally carrying out the subsequent steps G) - J) of this method, the sampled spectra (or better, the sampled intensities $x_i$(t) of the spectral lines thereof) are stored, which precede the instant $t_0$ for a predefined interval $\Delta T_{max}$;

B) pre-calculation, preferably by means of calibration, of the lowest $TeS_L$ and highest $TeS_H$ thresholds within which the electron temperature $Te(t_0)$ detected during the welding operation must be in the case of a welding without defects;

C) calculation, at each instant $t_0$, of the electron temperature $Te(t_0)$, as described above in h) and i) ;

D) check that this calculated electron temperature $Te(t_0)$ ranges within the interval $[TeS_L, TeS_H]$. When

$$Te(t_0) > TeS_H$$

or

$$Te(t_0) < TeS_L$$

then the peculiar method described herein assumes that a defect is present in the welding, and carries out the subsequent steps E) to J). On the contrary, when **Te(t$_0$)** ranges within said interval being defined by **TeS$_L$** and **TeS$_H$**, then the steps E) to J) are not carried out, and the steps A), C) and D) are repeated for the subsequent instant **t$_{0+1}$**;

E) calculation, at instant **t$_0$**, of the correlation parameter **c$_{i,j}$(t$_0$)**, such as described in the above-mentioned steps c) to f), at the following conditions:

$$\Delta T \leq \Delta T_{MAX} \, ,$$

and

the selected spectral lines **i, j,** ... must range within the spectral lines acquired in A) as stated above;

F) determination of a statistical significance threshold **S$_k$** for the correlation parameter **c$_{i,j}$**, which is preferably calculated simultaneously with the parameter **c$_{i,j}$** on the basis of the intensities **X$_i$(t)** on which **c$_{i,j}$** is calculated and/or on the basis of the parameters **c$_{i,j}$** calculated at previous instants **t$_0$** of the present method;

G) checking of the following condition:

$$c_{i,j}(t_0) < S_K \, .$$

When this condition is not met, the method described herein can assume that a defect is not really present in the welding and thus in this case the method provides for the repetition of the above-discussed steps A), C), D), etc.

On the contrary, when this condition is met, then the method can directly assume that a defect is present, and thus carry out the subsequent steps I) and J), or require that the subsequent step H) has been carried out, before moving on to steps I) and J);

H) checking that the condition for which **c$_{i,j}$** is lower than its statistical significance threshold **S$_k$** has repeated for two or more sequential (optionally consecutive) instants **t$_0$** considered by the present method. If this repetition has been carried out, then the method provides moving on to the subsequent steps I) and J). On the contrary, when this repetition has not been carried out, the method assumes that a defect is not really present;

I) ascertainment of the defect. During this step, the presence of a defect is signalled to the operator, during the welding operation;

J) determination of the type of defect, for example on the basis of the electron temperature **Te** calculated, and/or on the basis of the spectral lines considered in the calculation of **c$_{i,j}$** (i.e., of the corresponding elementary species that are present in the plasma) and/or on the basis of the value of **c$_{i,j}$**.

The steps A) to J) of the particular method for the instantaneous identification of defects during a welding process of the type with generation of plasma, or alternatively the information on the welding quality evaluation according to the steps a) to g) discussed above, according to another aspect of the present invention, can be used for determining, instant by instant, proper welding parameters, during the welding operation.

Particularly, the ascertainment of a defect, and the determination of the type of defect, are pieces of information which can, when duly converted into suitable digital formats, be used by processing means to calculate, at each instant **t$_0$**, the most adequate technological parameters of the welding process, such as for example in the case of a deep penetration laser welding, the power emitted by the laser beam 100, the welding speed, or forward movement of the beam 100 relative to the edges of the two pieces 4, 5, the flow rate, and optionally the pressure of the shielding gas, etc. The possibility of optimizing, instant by instant, these process parameters allows completely automating the welding (of the plasma generation type), while avoiding that the presence of any systematic defect is detected only at a later stage.

## Claims

1. A method for the instantaneous evaluation of the welding quality during a welding process, of the type with plasma generation, on metal materials, comprising the following steps:

a) instantaneous acquisition, at a predetermined frequency $\varphi$, of the radiations emitted by the plasma during the welding operation within the area in which the generation of plasma occurs; and

b) generation/acquisition, for each instant $t$ of acquisition of said radiations emitted by the plasma, of the respective emission spectrum;

**characterized in that** it comprises, for each considered instant $t_0$ of the welding, the steps of:

c) definition of a time interval $\Delta T$ preceding said instant $t_0$;

d) selection of two or more lines $i$, $j$ of the spectrum corresponding to two or more wavelengths $\lambda_i$, $\lambda_j$;

e) measurement of their intensity $x_i(t)$, for each instant $t$ of acquisition of the radiations, comprised within said time interval $\Delta T$;

f) calculation of at least one synthesis coefficient $c_{i,j},...(t_0)$, function of the intensity over time of said two or more lines of the spectrum $c_{i,j},...(t_0)=f(x_i(t),x_j(t), ...)$;

g) analysis of said at least one synthesis coefficient $c_{i,j}$ for evaluating the welding quality;

wherein said at least one synthesis coefficient $c_{i,j}$ is a statistical correlation parameter of said two or more lines of the spectrum on said time interval $\Delta T$.

2. The method according to claim 1, **characterized in that** said step of analysing said synthesis coefficient $c_{i,j}$ provides comparing said coefficient with one or more predefined threshold values $S_k$.

3. The method according to claim 2, wherein said one or more threshold values $S_k$ are statistical significance values for said synthesis coefficient $c_{i,j}$.

4. The method according to claim 2 or 3, wherein said one or more threshold values $S_k$ are calculated as a function of said selected spectral lines.

5. The method according to any preceding claim, wherein only two lines $i$, $j$ of the spectrum are selected, **characterized in that** said correlation parameter comprises a covariance measure.

6. The method according to claim 5, wherein said correlation parameter is a normalized covariance measure.

7. The method according to any preceding claim, **characterized in that** it comprises, after said steps of:

a) instantaneous acquisition, at a predetermined frequency $\varphi$, of the radiations emitted by the plasma during the welding operation within the area in which the generation of plasma occurs; and

b) generation/acquisition, for each instant of acquisition of said radiations emitted by the plasma, of the respective emission spectrum;

for each considered instant $t_0$ of the welding process, the steps of:

h) selection of one or more pairs of spectral lines;

i) calculation of the instantaneous measure of the plasma electron temperature $Te(t_0)$ over time on the basis of the intensity of these one or more pairs of spectral lines;

j) evaluation of the welding quality as a function of said instantaneous electron temperature $Te(t_0)$, as well as said synthesis coefficient $c_{i,j}$.

8. The method according to claim 7, **characterized in that** said step j) of evaluating the welding quality comprises comparing said instantaneous electron temperature $Te(t_0)$ with one ore more predefined threshold values $TeS_k$.

9. The method according to claim 8, **characterized in that** said one or more threshold values $TeS_k$ derive from a calibration step.

10. The method according to any preceding claim, **characterized in that** said predefined time interval $\Delta T$ is lower than, or equal to the total welding time.

11. The method according to any preceding claim, wherein for each instant $t_0$ of the welding, said time interval $\Delta T$ is a function of the welding speed.

**12.** The method according to claim 11, wherein said predefined time interval $\Delta T$ is inversely proportional to the welding speed.

**13.** The method according to any preceding claim, wherein the predefined time intervals $\Delta T$ of the succession of time intervals $\Delta T$ of each considered instant $t_0$, are partially superimposed to each other.

**14.** The method according to any preceding claim, wherein the considered instants $t_0$ follow at a given frequency $f$.

**15.** The method according to any preceding claim, **characterized in that** said predefined frequency $\varphi$ of instantaneous acquisition of the plasma-emitted radiations is variable and/or selected for each instant $t_0$ considered.

**16.** The method according to any preceding claim, wherein said step of instantaneous acquisition, at a predefined frequency $\varphi$, of the radiation emitted by the plasma during the welding operation provides the acquisition of said radiations coming from areas of the welding seam which are variable over time.

**17.** The method according to any preceding claim, **characterized in that** said step of instantaneous acquisition, at a predefined frequency $\varphi$, of the radiation emitted by the plasma during the welding operation relates to the radiations emitted in the ultraviolet and/or visible light fields.

**18.** The method according to any preceding claim, **characterized in that** said welding of the type in which a plasma generation occurs is a laser welding.

**19.** The method according to any preceding claim, **characterized in that** said two or more lines $i, j$ of the spectrum, corresponding to two or more wavelengths $\lambda_i, \lambda_j$, are selected in relation with two or more chemical species that are present in the plasma.

**20.** The method according to claim 19, wherein said two or more chemical species comprise at least one metal material provided in the welding, in a chemical species thereof which is present in the plasma.

**21.** The method according to claim 19 or 20, wherein said two or more chemical species comprise at least oxygen, in a chemical species thereof which is present in the plasma.

**22.** The method according to any claim 19 to 21, wherein said two or more chemical species comprise at least two species of metal elements which are present in the plasma.

**23.** A method for the instantaneous identification of defects in the welding seam of metal materials during a welding operation of the type with plasma generation, **characterized in that** it comprises the steps of the method according to any preceding claim.

**24.** A method for the instantaneous identification of defects in the welding seam of metal materials during a welding operation of the type with plasma generation, previously comprising the steps of:

i) instantaneous acquisition, at a predetermined frequency $\varphi$, of the radiations emitted by the plasma during the welding operation;
ii) generation/acquisition, for each instant of acquisition of said radiations emitted by the plasma, of the respective emission spectrum, and
for each instant $t_0$ of the welding process, the steps of:
iii) selection of one or more pairs of spectral lines;
iv) calculation of the instantaneous measure of the plasma electron temperature $Te(t_0)$ over time, on the basis of the intensity of said one or more pairs of spectral lines;
v) evaluation of the presence of a defect on the basis of the comparison of said instantaneous electron temperature $Te(t_0)$ with one ore more predefined threshold values $TeS_k$;
vi) carrying out the steps of the method according to any claim 1 to 21 only when said step v) provides results indicating the presence of a defect.

**25.** A method for the instantaneous control of a welding process of the type in which a plasma generation occurs of metal materials, wherein one or more welding parameters are adjusted during the welding operation as a function of the result of said step of evaluating the welding quality, according to the method of any claim 1 to 22.

26. The method according to claim 25, wherein said welding of the type in which a plasma generation occurs is a laser welding and said welding parameters adjusted during the welding operation are selected from: emitted power of the laser beam, advancing speed of the laser beam along the welding edges, flow rate of the shielding gas.

**Patentansprüche**

1. Verfahren zur instantanen Beurteilung der Schweißqualität während eines Schweißprozesses von Metallen, derart, dass ein Plasma erzeugt wird, folgende Schritte umfassend:

   a) Instantane Erfassung der Strahlung bei einer vorbestimmten Frequenz $\varphi$, die durch das Plasma während des Schweißvorgangs in dem Bereich emittiert wird, in dem die Erzeugung von Plasma erfolgt; und
   b) Bestimmung/Erfassung des entsprechenden Emissionsspektrums, zu jedem Erfassungszeitpunkt t der Strahlung, die durch das Plasma emittiert wird;
   dadurch gekennzeichnet, dass es für jeden betrachteten Schweißzeitpunkt $t_0$ die folgenden Stufen umfasst:
   c) Definition eines Zeitintervalls $\Delta T$, das dem Zeitpunkt $t_0$ vorhergeht;
   d) Auswahl von zwei oder mehreren Spektrallinien, i, j, die zwei oder mehreren Wellenlängen $\lambda_i$, $\lambda_j$ entsprechen;
   e) Messung der Intensität $x_i(t)$ zu jedem Strahlungserfassungszeitpunkt t, der von dem Zeitintervalls $\Delta T$ umfasst wird;
   f) Berechnung von wenigstens einem Synthesekoeffizienten $c_{i,j},...(t_0)$, der eine Funktion der Intensität über der Zeit von den zwei oder mehreren Spektrallinien ist $c_{i,j},...(t_0)=f(x_i(t),x_j(t),...)$;
   g) Analyse des wenigstens einen Synthesekoeffizienten $c_{i,j}$ zur Beurteilung der Schweißqualität;

   wobei der wenigstens eine Synthesekoeffizient $c_{i,j}$ ein statistischer Korrelationsparameter von den zwei oder mehreren Spektrallinien über dem Zeitintervall $\Delta T$ ist.

2. Verfahren nach Anspruch 1, dadurch gekennzeichnet, dass der Schritt der Analyse des Synthesekoeffizienten $c_{i,j}$ den Vergleich des Koeffizienten mit einem oder mehreren vordefinierten Grenzwerten $S_k$ vorsieht.

3. Verfahren nach Anspruch 2, wobei der eine oder die vielen Grenzwerte $S_k$ statistische Kennzahlen für den Synthesekoeffizienten $c_{i,j}$ sind.

4. Verfahren nach einem der Ansprüche 2 oder 3, wobei der eine oder die vielen Grenzwerte $S_k$ als Funktion der ausgewählten Spektrallinien berechnet werden.

5. Verfahren nach einem der vorhergehenden Ansprüche, wobei nur zwei Spektrallinien i, j ausgewählt werden, dadurch gekennzeichnet, dass der Korrelationsparameter ein Kovarianzmaß umfasst.

6. Verfahren nach Anspruch 5, wobei der Korrelationsparameter ein normalisiertes Kovarianzmaß ist.

7. Verfahren nach einem der vorhergehenden Ansprüche, dadurch gekennzeichnet, dass es nach den Schritten der:

   a) Instantanen Erfassung der Strahlung bei einer vorbestimmten Frequenz $\varphi$, die durch das Plasma während des Schweißvorgangs in dem Bereich emittiert wird, in dem die Erzeugung des Plasmas erfolgt; und
   b) Bestimmung/Erfassung des entsprechenden Emissionsspektrums, zu jedem Erfassungszeitpunkt der Strahlung, die durch das Plasma emittiert wird;
   für jeden betrachteten Zeitpunkt $t_0$ des Schweißvorgangs, die folgenden Schritte umfasst:

   h) Auswahl von einem oder mehreren Spektrallinienpaaren;
   i) Berechnung eines instantanen Maßes für die Elektronentemperatur $Te(t_0)$ des Plasmas über der Zeit, basierend auf der Intensität von dem einen oder den mehreren Spektrallinienpaaren;
   j) Beurteilung der Schweißqualität als Funktion dieser instantanen Elektronentemperatur $Te(t_0)$, sowie des Synthesekoeffizienten $c_{i,j}$.

8. Verfahren nach Anspruch 7, dadurch gekennzeichnet, dass der Schritt j) zur Beurteilung der Schweißqualität das Vergleichen der instantanen Elektronentemperatur $Te(t_0)$ mit einem oder mehreren vordefinierten Grenzwerten $TeS_k$ umfasst.

9. Verfahren nach Anspruch 8, **dadurch gekennzeichnet, dass** der eine oder die mehreren Grenzwerte $TeS_k$ von einem Kalibrierungsschritt abgeleitet ist/sind.

10. Verfahren nach einem der vorhergehenden Ansprüche, **dadurch gekennzeichnet, dass** das vordefinierte Zeitintervall $\Delta T$ kleiner als oder gleich der gesamten Schweißzeit ist.

11. Verfahren nach einem der vorhergehenden Ansprüche, wobei für jeden Schweißzeitpunkt $t_0$, das Zeitintervall $\Delta T$ eine Funktion der Schweißgeschwindigkeit ist.

12. Verfahren nach Anspruch 11, wobei das vordefinierte Zeitintervall $\Delta T$ umgekehrt proportional zur Schweißgeschwindigkeit ist.

13. Verfahren nach einem der vorhergehenden Ansprüche, wobei die vordefinierten Zeitintervalle $\Delta T$, aus der Aufeinanderfolge von Zeitintervallen $\Delta T$ zu jedem betrachteten Zeitpunkt $t_0$, sich teilweise überlappen.

14. Verfahren nach einem der vorhergehenden Ansprüche, wobei die betrachteten Zeitpunkte $t_0$ mit einer gegebenen Frequenz f aufeinanderfolgen.

15. Verfahren nach einem der vorhergehenden Ansprüche, **dadurch gekennzeichnet, dass** die vordefinierte Frequenz $\varphi$ der instantanen Erfassung der von dem Plasma emittierten Strahlung variabel ist und/oder für jeden betrachteten Zeitpunkt $t_0$ ausgewählt ist.

16. Verfahren nach einem der vorhergehenden Ansprüche, wobei der Schritt der instantanen Erfassung, der bei einer vordefinierten Frequenz $\varphi$ durch das Plasma während das Schweißvorgangs emittierten Strahlung, die Erfassung der Strahlung vorsieht, die von den über die Zeit variablen Bereichen der Schweißnaht kommt.

17. Verfahren nach einem der vorhergehenden Ansprüche, **dadurch gekennzeichnet, dass** die instantane Erfassung, der bei einer vordefinierten Frequenz $\varphi$ durch das Plasma während des Schweißvorgangs emittierten Strahlung, sich auf die Strahlung bezieht, die im ultravioletten und/oder sichtbaren Lichtfeld emittiert wird.

18. Verfahren nach einem der vorhergehenden Ansprüche, **dadurch gekennzeichnet, dass** das Schweißen, derart, dass ein Plasma erzeugt wird, Laserschweißen ist.

19. Verfahren nach einem der vorhergehenden Ansprüche, **dadurch gekennzeichnet, dass** die zwei oder mehreren Spektrallinien i, j, die den zwei oder mehreren Wellenlängen $\lambda_i$, $\lambda_j$ entsprechen, mit Bezug auf zwei oder mehrere chemische Spezies, die in dem Plasma vorhanden sind, ausgewählt werden.

20. Verfahren nach Anspruch 19, wobei die zwei oder mehreren chemischen Spezies wenigstens ein Metall umfassen, das beim Schweißen als chemische Spezies vorliegt, die in dem Plasma vorhanden ist.

21. Verfahren nach einem der Ansprüche 19 oder 20, wobei die zwei oder mehreren chemischen Spezies wenigstens Sauerstoff in einer in dem Plasma vorliegenden chemischen Spezies desselben umfassen.

22. Verfahren nach einem der Ansprüche 19 bis 21, wobei die zwei oder mehreren chemischen Spezies wenigstens zwei Sorten von in dem Plasma vorliegenden Metallelementen umfassen.

23. Verfahren zur instantanen Identifikation von Defekten in der Schweißnaht von Metallen während eines Schweißvorgangs, derart, dass Plasma erzeugt wird, **dadurch gekennzeichnet, dass** es die Schritte des Verfahrens nach einem der vorhergehenden Ansprüche umfasst.

24. Verfahren zur instantanen Identifikation von Defekten in der Schweißnaht von Metallen während eines Schweißvorgangs, derart, dass Plasma erzeugt wird, die folgenden Schritte vorhergehend umfassend:

   i) Instantane Erfassung der Strahlung bei einer vorbestimmten Frequenz $\varphi$, die von dem Plasma während des Schweißvorgangs emittiert wird;
   ii) Bestimmung/Erfassung des entsprechenden Emissionsspektrums zu jedem Erfassungszeitpunkt der Strahlung, die von dem Plasma emittiert wird, und
   für jeden Zeitpunkt $t_0$ des Schweißvorgangs die folgenden Schritte:

iii) Auswahl von einem oder mehreren Spektrallinienpaaren;

iv) Berechnung des instantanen Maßes für die Elektronentemperatur Te(t$_0$) des Plasmas über der Zeit, basierend auf der Intensität des einen oder der mehreren Spektrallinienpaare;

v) Beurteilung des Vorhandenseins eines Defektes basierend auf dem Vergleich der instantanen Elektronentemperatur Te(t$_0$) mit einer oder mehreren vordefinierten Grenzwerten TeS$_k$;

vi) Ausführen der Schritte des Verfahrens nach einem der Ansprüche 1 bis 21 und zwar nur, wenn der fünfte Schritt Ergebnisse liefert, die das Vorhandensein eines Defektes anzeigen.

25. Verfahren zur instantanen Kontrolle eines Schweißvorgangs von Metallen, derart, dass Plasma erzeugt wird, wobei ein oder mehrere Schweißparameter während des Schweißvorgangs, als Funktion des sich aus dem Schritt zur Beurteilung der Schweißqualität ergebenden Ergebnisses, nach einem der Ansprüche 1 bis 22 angepasst werden.

26. Verfahren nach Anspruch 25, wobei das Schweißen, derart, dass Plasma erzeugt wird, Laserschweißen ist und die Schweißparameter, die während des Schweißvorgangs angepasst werden, ausgewählt werden aus: der emittierten Leistung des Laserstrahls, Fortschrittsgeschwindigkeit des Laserstrahls entlang der Schweißkanten, Flussrate des Schutzgases.

## Revendications

1. Procédé pour l'évaluation instantanée de la qualité de soudure au cours d'un traitement de soudage, du type avec génération de plasma, sur des matériaux métalliques, comprenant les étapes suivantes :

   a) acquisition instantanée, à une fréquence prédéterminée φ, des rayonnements émis par le plasma au cours de l'opération de soudage à l'intérieur de la zone dans laquelle la génération de plasma se produit ; et

   b) génération/acquisition, pour chaque instant t d'acquisition desdits rayonnements émis par le plasma, du spectre d'émission respectif ;

   **caractérisé en ce qu'**il comprend, pour chaque instant considéré t$_0$ du soudage, les étapes de :

   c) définition d'un intervalle temporaire $\Delta T$ précédant ledit instant t$_0$ ;

   d) sélection de deux, ou plus, lignes i, j du spectre correspondant à deux, ou plus, longueurs d'onde $\lambda_i$, $\lambda_j$ ;

   e) mesure de leur intensité x$_i$(t), pour chaque instant t d'acquisition des rayonnements, compris à l'intérieur dudit intervalle temporel $\Delta T$ ;

   f) calcul d'au moins un coefficient de synthèse c$_{i,j}$...(t$_0$), une fonction de l'intensité avec le temps desdites deux, ou plus, lignes du spectre c$_{i,j}$...(t$_0$)=f(x$_i$(t),x$_j$(t),...) ;

   g) analyse dudit au moins un coefficient de synthèse c$_{i,j}$ pour évaluer la qualité de soudure ;

   dans lequel ledit au moins un coefficient de synthèse c$_{i,j}$ est un paramètre de corrélation statistique desdites deux, ou plus, lignes du spectre sur ledit intervalle temporel $\Delta T$.

2. Procédé selon la revendication 1, **caractérisé en ce que** ladite étape d'analyse dudit coefficient de synthèse c$_{i,j}$ comprend l'étape de comparaison dudit coefficient à une ou de multiples valeurs de seuil prédéfinies S$_k$.

3. Procédé selon la revendication 2, dans lequel ladite ou lesdites multiples valeurs de seuil S$_k$ sont des valeurs d'importance statistique pour ledit coefficient de synthèse c$_{i,j}$.

4. Procédé selon la revendication 2 ou 3, dans lequel ladite ou lesdites multiples valeurs de seuil S$_k$ sont calculées en fonction desdites lignes spectrales sélectionnées.

5. Procédé selon une quelconque des revendications précédentes, dans lequel seulement deux lignes i, j du spectre sont sélectionnées, **caractérisé en ce que** ledit paramètre de corrélation comprend une mesure de covariance.

6. Procédé selon la revendication 5, dans lequel ledit paramètre de corrélation est une mesure de covariance normalisée.

7. Procédé selon une quelconque des revendications précédentes, **caractérisé en ce qu'**il comprend, après lesdites étapes de :

   a) acquisition instantanée, à une fréquence prédéterminée φ, des rayonnements émis par le plasma au cours de l'opération de soudage à l'intérieur de la zone dans laquelle la génération de plasma se produit ; et
b) génération/acquisition, pour chaque instant d'acquisition desdits rayonnements émis par le plasma, du spectre d'émission respectif ;

pour chaque instant considéré $t_0$ du traitement de soudage, les étapes de :

h) sélection d'une ou de multiples paires de lignes spectrales ;
i) calcul de la mesure instantanée de la température électronique de plasma $Te(t_0)$ avec le temps sur la base de l'intensité de cette ou de ces multiples paires de lignes spectrales ;
j) évaluation de la qualité de soudure en fonction de ladite température électronique instantanée $Te(t_0)$, ainsi que dudit coefficient de synthèse $c_{i,j}$.

8. Procédé selon la revendication 7, **caractérisé en ce que** ladite étape j) d'évaluation de la qualité de soudure comprend la comparaison de ladite température électronique instantanée $Te(t_0)$ à une ou de multiples valeurs de seuil prédéfinies $TeS_k$.

9. Procédé selon la revendication 8, **caractérisé en ce que** ladite ou lesdites multiples valeurs de seuil $TeS_k$ sont dérivées d'une étape de calibration.

10. Procédé selon une quelconque des revendications précédentes, **caractérisé en ce que** ledit intervalle temporel prédéfini $\Delta T$ est inférieur, ou égal au temps de soudage total.

11. Procédé selon une quelconque des revendications précédentes, dans lequel, pour chaque instant $t_0$ du soudage, ledit intervalle temporel $\Delta T$ est une fonction de la vitesse de soudage.

12. Procédé selon la revendication 11, dans lequel ledit intervalle temporel prédéfini $\Delta T$ est inversement proportionnel à la vitesse de soudage.

13. Procédé selon une quelconque des revendications précédentes, dans lequel les intervalles temporels prédéfinis $\Delta T$ de la succession d'intervalles temporels $\Delta T$ de chaque instant considéré $t_0$, sont partiellement superposés.

14. Procédé selon une quelconque des revendications précédentes, dans lequel les instants considérés $t_0$ suivent à une fréquence donnée f.

15. Procédé selon une quelconque des revendications précédentes, **caractérisé en ce que** ladite fréquence prédéfinie $\varphi$ d'acquisition instantanée des rayonnements émis par plasma est variable et/ou sélectionnée pour chaque instant $t_0$ considéré.

16. Procédé selon une quelconque des revendications précédentes, dans lequel ladite étape d'acquisition instantanée, à une fréquence prédéfinie $\varphi$, du rayonnement émis par le plasma au cours de l'opération de soudage comprend l'étape de l'acquisition desdits rayonnements provenant de zones du joint de soudure qui sont variables avec le temps.

17. Procédé selon une quelconque des revendications précédentes, **caractérisé en ce que** ladite étape d'acquisition instantanée, à une fréquence prédéfinie $\varphi$, du rayonnement émis par le plasma au cours de l'opération de soudage est connexe aux rayonnements émis dans les champs de lumière ultraviolette et/ou visible.

18. Procédé selon une quelconque des revendications précédentes, **caractérisé en ce que** ledit soudage du type dans lequel une génération de plasma se produit est un soudage au laser.

19. Procédé selon une quelconque des revendications précédentes, **caractérisé en ce que** lesdites deux, ou plus, lignes i, j du spectre, correspondant à deux, ou plus, longueurs d'onde $\lambda_i$, $\lambda_j$, sont sélectionnées par rapport à deux, ou plus, espèces chimiques qui sont présentes dans le plasma.

20. Procédé selon la revendication 19, dans lequel lesdites deux, ou plus, espèces chimiques comprennent au moins un matériau métallique prévu dans le soudage, dans une espèce chimique de celui-ci qui est présente dans le plasma.

21. Procédé selon la revendication 19 ou 20, dans lequel lesdites deux, ou plus, espèces chimiques comprennent au moins de l'oxygène, dans une espèce chimique de celui-ci qui est présente dans le plasma.

**22.** Procédé selon une quelconque des revendications 19 à 21, dans lequel lesdites deux, ou plus, espèces chimiques comprennent au moins deux espèces d'éléments métalliques qui sont présents dans le plasma.

**23.** Procédé pour l'identification instantanée de défauts dans le joint de soudure de matériaux métalliques au cours d'une opération de soudage du type avec génération de plasma, **caractérisé en ce qu'**il comprend les étapes du procédé selon une quelconque des revendications précédentes.

**24.** Procédé pour l'identification instantanée de défauts dans le joint de soudure de matériaux métalliques au cours d'une opération de soudage du type avec génération de plasma, comprenant auparavant les étapes de :

i) acquisition instantanée, à une fréquence prédéterminée $\varphi$, des rayonnements émis par le plasma au cours de l'opération de soudage ;
ii) génération/acquisition, pour chaque instant d'acquisition desdits rayonnements émis par le plasma, du spectre d'émission respectif, et
pour chaque instant $t_0$ du traitement de soudage, les étapes de :
iii) sélection d'une ou de multiples paires de lignes spectrales ;
iv) calcul de la mesure instantanée de la température électronique de plasma $Te(t_0)$ avec le temps, sur la base de l'intensité de ladite ou desdites multiples paires de lignes spectrales ;
v) évaluation de la présence d'un défaut sur la base de la comparaison de ladite température électronique instantanée $Te(t_0)$ à une ou de multiples valeurs de seuil prédéfinies $TeS_k$ ;
vi) réaliser les étapes du procédé selon une quelconque des revendications 1 à 21 seulement lorsque ladite étape v) comprend l'étape de résultats indiquant la présence d'un défaut.

**25.** Procédé pour le contrôle instantané d'un traitement de soudage du type dans lequel une génération de plasma se produit de matériaux métalliques, dans lequel un ou de multiples paramètres de soudage sont réglés au cours de l'opération de soudage en fonction du résultat de ladite étape d'évaluation de la qualité de soudure, selon le procédé selon une quelconque des revendications 1 à 22.

**26.** Procédé selon la revendication 25, dans lequel ledit soudage du type dans lequel une génération de plasma se produit est un soudage au laser et lesdits paramètres de soudage réglés au cours de l'opération de soudage sont sélectionnés parmi : la puissance émise du faisceau laser, la vitesse d'avance du faisceau laser le long des bords de soudure, le débit du gaz de protection.

Fig.1

# Fig.2

# Fig.3

A) Acquisition plasma UV + Vis spectrum (any instant $t_k$)

C) Calculation of $Te(t0)$

$t_0 = t_0 + 1$

B) Calculation thresholds $TeS_L$ & $TeS_H$ by calibration

D) $T_e(t_0)$ within the range $T_eS_l \longleftrightarrow T_eS_h$ ?  —— SI

NO

E) Calculation $C_{ij}(t_0)$ in $\Delta T$ [Fig. 2]

F) Determination of threshold $S_k$

G) $c_{ij}(t_0) < S_k$ ?  —— NO

H) Event repeated?  —— NO

SI

I) Defect ascertained

J) Determination of the type of defect on the basis of
$T_e(t_0)$
$i ; j$
$c_{ij}(t_0)$

17

Fig.4

Fig.5

Fig.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 4313287 A
- EP 0911110 A
- JP 2002079386 B
- IT 1314519